# EUROPÄISCHE PATENTSCHRIFT

(11) **EP 2 140 159 B1**
(45) Veröffentlichungstag und Bekanntmachung des Hinweises auf die Patenterteilung: **30.03.2016**
(21) Anmeldenummer: 08735292.8
(22) Anmeldetag: 17.04.2008
(51) Int. Cl.: F16D 25/0638, F16D 25/10

(54) **KUPPLUNGSANORDNUNG**
COUPLING ARRANGEMENT
DISPOSITIF D'EMBRAYAGE

(30) Priorität: 24.04.2007 DE 102007019604
(43) Veröffentlichungstag der Anmeldung: 06.01.2010
(73) Patentinhaber: BorgWarner Inc., Auburn Hills, MI 48326 (US)
(72) Erfinder: GÜNTER, Frank, 76228 Karlsruhe (DE); NICKLAS, Götz, 67354 Römerberg (DE)
(74) Vertreter: Leckel, Ulf
(86) Internationale Anmeldenummer: PCT/EP2008/003058
(87) Internationale Veröffentlichungsnummer: WO 2008/128695

(56) Entgegenhaltungen:
- EP-A- 1 174 633
- EP-A- 1 612 444
- US-A1- 2005 139 023
- US-A1- 2005 194 229

## Beschreibung

Die Erfindung bezieht sich auf eine Kupplungsanordnung mit den oberbegrifflichen Merkmalen des Patentanspruchs 1.

Allgemein bekannt sind Einfach- und Mehrfach-Kupplungsanordnungen mit einer gehäusefesten Komponente, einem bzw. mehreren hohlzylindrisch ausgebildeten Kolben, welche relativ zur gehäusefesten Komponente um eine Rotationsachse drehbar angeordnet sind, und einer rotierbaren bzw. in eine Rotation versetzbaren Komponente, die relativ zur gehäusefesten Komponente als eine um die Rotationsachse herum angeordnete Komponente ausgebildet ist und eine hohlzylindrisch ausgebildete Kammer bzw. im Fall mehrerer Kolben mehrere hohlzylindrisch ausgebildete Kammern stirnseitig des bzw. der Kolben aufweist. Außerdem weist eine solche Kupplungsanordnung zumindest eine Leitungsanordnung auf, welche durch die gehäusefeste Komponente und die rotierbare Komponente hindurch für ein Druckmedium in Art eines Hydrauliköls eine Kommunikationsleitung zur Kammer ausbildet. Eine Drehdurchführungsdichtung dient dazu, die Leitungsanordnung zwischen der gehäusefesten Komponente und der rotierbaren Komponente abzudichten. Eine derartige Mehrfach-Kupplungsanordnung ist beispielsweise aus der US 2005/0139023 A1 bekannt.

Eine ähnliche Kupplungsanordnung ist ferner aus der US 2005/0194229 A1 bekannt, wobei den beiden Kolben der bekannten Doppelkupplungsanordnung jeweils eine Fliehölkompensationskammer zugeordnet ist.

Nachteilhaft ist bei solchen Anordnungen, dass mit zunehmender Rotationsgeschwindigkeit der rotierbaren Komponente in den Kammern stärkere Fliehkräfte auf das dort vorhandene Hydrauliköl wirken. Es bildet sich in diesen ein von der Fliehkraft bzw. der Rotationsgeschwindigkeit abhängiger Druck aus. Wird dieser zu hoch, kann dies zu einem unerwünschten Schließen der Kupplung führen. Um dies auszugleichen, werden Vorrichtungen bzw. Steuerungen zur Fliehkraft-Kompensation vorgesehen. Nachteilhaft ist somit insbesondere in hydraulisch direkt betätigten Kupplungen ein sich im rotierenden Druckkolben aufbauender Fliehkraftdruck, welcher bei normal offenen Kupplungen drehzahlabhängig zu einem selbsttätigen Schließen der Kupplung führen kann, so dass Fliehkraft-Ausgleichskolben einzusetzen sind.

Die Aufgabe der Erfindung besteht darin, eine Kupplungsanordnung vorzuschlagen, welche einen vereinfachten Aufbau aufweist.

Diese Aufgabe wird durch die Kupplungsanordnung mit den Merkmalen des Patentanspruchs 1 gelöst. Vorteilhafte Ausgestaltungen sind Gegenstand abhängiger Ansprüche.

Bevorzugt wird demgemäß eine Kupplungsanordnung mit einer gehäusefesten Komponente, einem Kolben, der relativ zur gehäusefesten Komponente um eine Rotationsachse drehbar angeordnet ist, einer rotierbaren Komponente, die relativ zur gehäusefesten Komponente als eine um die Rotationsachse angeordnete Komponente ausgebildet ist und eine Kammer im stirnseitigen Bereich des Kolbens aufweist, einer Leitungsanordnung, die durch die gehäusefeste Komponente und die rotierbare Komponente hindurch für ein Druckmedium eine Kommunikationsleitung zur Kammer ausbildet, und insbesondere einer Drehdurchführungsdichtung, welche die Leitungsanordnung zwischen der gehäusefesten Komponente und der rotierbaren Komponente abdichtet, wobei von der Rotationsachse ausgehend ein radialer Innenabstand und/oder ein radialer Außenabstand des Kolbens kleiner als ein radialer Dichtungsabstand der Drehdurchführungsdichtung ist. Das Verhältnis (r0 - ri) / (ra - r0) von einerseits dem radialen Innenabstand ri des Kolbens und von andererseits einem radialen Außenabstand ra des Kolbens zum radialen Dichtungsabstand r0 ist derart dimensioniert, dass bei einer vorbestimmten Rotationsgeschwindigkeit der rotierbaren Komponente ein auf den Kolben wirkender Druck den Kolben auch ohne eine zusätzliche Fliehkraftkompensation nicht betätigt. Die vorbestimmte Rotationsgeschwindigkeit entspricht einer vorgegebenen Auslegungsdrehzahl, nämlich einer Höchstdrehzahl eines den übrigen Komponenten zugeordneten Antriebes im Betrieb.

In einer alternativen Ausführungsform der erfindungsgemäßen Kupplungsanordnung weist diese eine gehäusefeste Komponente, einen Kolben, der relativ zur gehäusefesten Komponente um eine Rotationsachse drehbar angeordnet ist, eine rotierbare Komponente, die relativ zur gehäusefesten Komponente als eine um die Rotationsachse angeordnete Komponente ausgebildet ist und eine Kammer im stirnseitigen Bereich des Kolbens aufweist, eine Leitungsanordnung, die durch die gehäusefeste Komponente und die rotierbare Komponente hindurch für ein Druckmedium eine Kommunikationsleitung zur Kammer ausbildet, und insbesondere eine Drehdurchführungsdichtung auf, welche die Leitungsanordnung zwischen der gehäusefesten Komponente und der rotierbaren Komponente abdichtet, wobei von der Rotationsachse ausgehend ein radialer Außenabstand des Kolbens kleiner als ein radialer Dichtungsabstand der Drehdurchführungsdichtung ist.

Die rotierbare Komponente weist bevorzugt eine Kolbendichtung auf oder bildet eine solche aus.

Die Leitungsanordnung bildet vorteilhaft eine Kommunikationsleitung zu zusätzlich zumindest einer weiteren Kammer für einen weiteren Kolben aus, wobei vorzugsweise auch von der Rotationsachse ausgehend ein radialer Innenabstand auch des weiteren Kolbens kleiner als der radiale Dichtungsabstand der Drehdurchführungsdichtung ist.

Ein Ausführungsbeispiel wird nachfolgend anhand der Zeichnung näher erläutert. In den verschiedenen Figuren verwendete gleichlautende Bezugszeichen stehen für gleiche oder gleichwirkende Komponenten und/oder Funktionen und werden vorzugsweise nur anhand einer der Figuren näher erläutert. Es zeigen:
- Fig. 1: schematisch ein Anordnungsprinzip von Komponenten einer Kupplung sowie ein Diagramm zur Veranschaulichung von Druckverhältnissen in einer Kammer einer solchen Kupplung,
- Fig. 2: eine Schnittansicht durch eine beispielhafte Doppelkupplung zur Umsetzung des Funktionsprinzips aus Fig. 1 und
- Fig. 3: eine weitere beispielhafte Kupplungsanordnung.

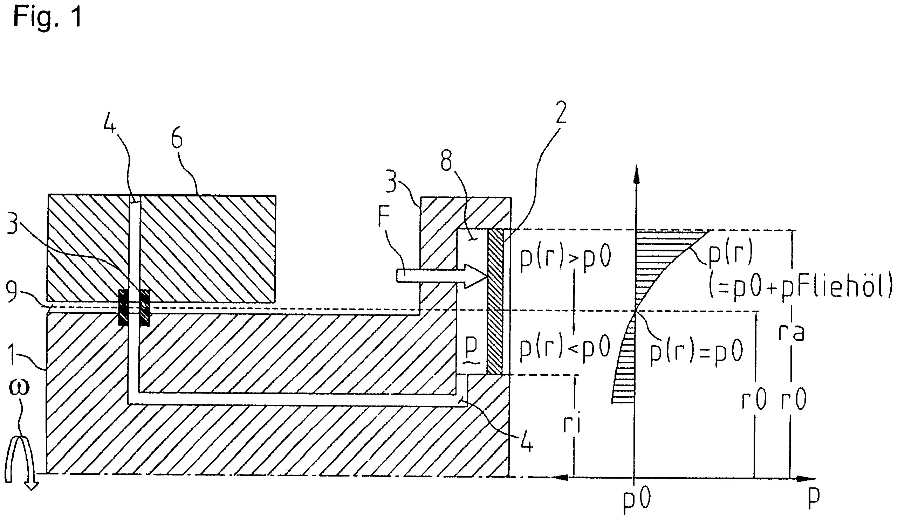

Wie dies schematisiert aus Fig. 1 ersichtlich ist, weist eine Kupplungsanordnung zum Ausbilden einer Ein- oder Mehrfach-Kupplung eine gehäusefeste Komponente 6 auf. Innerhalb der gehäusefesten Komponente 6 ist eine rotierbare Komponente 1, die gegebenenfalls auch mehrteilig ausgebildet sein kann, angeordnet, welche mittels einer Antriebseinrichtung wie einem Motor in eine Rotation um eine Rotationsachse ω versetzbar ist. Zur Kupplungsbetätigung weist die Kupplungsanordnung zumindest eine Zylinder-/Kolbenanordnung mit einem zumindest stirnseitig ringförmig oder im Wesentlichen hohlzylindrisch ausgebildeten Kolben 2 auf, wobei der Kolben 2 relativ zur gehäusefesten Komponente 6 um die Rotationsachse ω drehbar angeordnet ist. Insbesondere ist der Kolben 2 zylinderförmig ausgestaltet. Zum Betätigen des Kolbens 2 weist die rotierbare Komponente 1 eine der Stirnseite des Kolbens 2 zugewandte und den Kolben 2 aufnehmende, ringförmig oder hohlzylindrisch ausgebildete Kammer 8 auf. Die rotierbare Komponente 1 ist somit als eine relativ zur gehäusefesten Komponente 6 um die Rotationsachse ω angeordnete Komponente ausgebildet und weist eine Kammer 8 im stirnseitigen Bereich des Kolbens 2 auf. Wie dies skizziert ist, kann die rotierbare Komponente 1 als Kolbendichtung ausgebildet sein oder eine Kolbendichtung aufweisen.

Zur Betätigung des Kolbens 2, das heißt zum Ausüben einer Kraft F auf die Stirnseite des Kolbens 2, führt eine Leitungsanordnung zu der Kammer 8, um ein Druckmedium, üblicherweise ein Hydrauliköl, in die Kammer 8 hinein oder aus der Kammer 8 heraus zu leiten. Da eine Pumpe zum Pumpen des Druckmediums zweckmäßig relativ zur gehäusefesten Komponente gehäusefest angeordnet ist, die Kammer 8 jedoch innerhalb der rotierbaren Komponente 1 ausgebildet ist, führt ein erster Abschnitt der Leitungsanordnung 4 durch die gehäusefeste Komponente 6 und ein zweiter Abschnitt der Leitungsanordnung 4 durch die rotierbare Komponente 1 zur Kammer 8 hin. Dadurch bildet die Leitungsanordnung eine Kommunikationsleitung für das Druckmedium aus, welche durch sowohl die gehäusefeste Komponente 6 als auch die rotierbare Komponente 1 hindurchführt.

Im Übergangsbereich zwischen der gehäusefesten Komponente 6 und der rotierbaren Komponente 1 sind eine bzw. zwei Drehdurchführungsdichtungen 3 eingesetzt, welche die Leitungsanordnung 4 gegenüber einem Spalt 9 zwischen der gehäusefesten Komponente 6 und der rotierbaren Komponente 1 abdichten. Eine kontinuierliche Druckbeaufschlagung des zweiten, rotierbaren Abschnitts der Leitungsanordnung 4 ist dadurch möglich, dass im Übergangsbereich zur gehäusefesten Komponente 6 in der gehäusefesten Komponente 6 und/oder in der rotierbaren Komponente 1 eine umlaufende Nut ausgebildet ist, so dass die Leitungsanordnung 4 in vorzugsweise jeder Rotationsposition der rotierbaren Komponente 1 eine offene Kommunikationsleitung für das Druckmedium ausbildet.

Zur Vermeidung oder Reduzierung des Erfordernisses einer Fliehkraftkompensation werden die Komponenten in radialer Richtung von der Rotationsachse ω ausgehend vorteilhaft dimensioniert ausgebildet. Wie dies Fig. 1 entnehmbar ist, ist von der Rotationsachse ω ausgehend ein radialer Innenabstand ri des Kolbens 2 kleiner als ein radialer Dichtungsabstand r0 der Drehdurchführungsdichtung 3. Dies bewirkt bei einer Rotation, dass in dem der Rotationsachse ω zugewandten Abschnitt der Kammer 8 bei einer Rotation relativ zu dem radialen Dichtungsabstand r0 ein Unterdruck entsteht.

Vorteilhaft ist bei der dargestellten Ausgestaltung ein radialer Außenabstand ra des Kolbens 2 von der Rotationsachse ω ausgehend größer als der radiale Dichtungsabstand r0 der Drehdurchführungsdichtung 3. Dies bewirkt, dass in diesem außenseitigen Abschnitt der Kammer 8 in üblicher Art und Weise bei Rotation ein Überdruck relativ zu dem radialen Dichtungsabstand r0 entsteht. Für besondere Ausführungsformen kann der radiale Außenabstand ra des Kolbens 2 von der Rotationsachse ω ausgehend aber auch kleiner als der radiale Dichtungsabstand r0 der Drehdurchführungsdichtung 3 sein.

Durch eine geeignete Wahl des radialen Innenabstands ri des Kolbens 2, des radialen Außenabstands ra des Kolbens 2 und des radialen Dichtungsabstands r0 der Drehdurchführungsdichtung 3 ist dadurch in vorteilhafter Art und Weise ein drehzahlabhängiger Druck p in der Kammer 8 vorgebbar. Bei der Dimensionierung wird für eine typische vorbestimmte Rotationsgeschwindigkeit festgelegt, dass bei dieser vorbestimmten Rotationsgeschwindigkeit eine Fliehkraftkompensation vorzugsweise nicht erforderlich sein soll. Dazu wird das Verhältnis ((r0 - ri) / (ra - r0)) von einerseits dem radialen Innenabstand ri des Kolbens 2 und von andererseits dem radialen Außenabstand ra des Kolbens 2 zum radialen Dichtungsabstand r0 für die vorbestimmte Rotationsgeschwindigkeit der rotierbaren Komponente derart dimensioniert, dass eine auf den Kolben 2 wirkende Kraft F bzw. ein in der Kammer 8 gesamt wirkender Druck p den Kolben 2 auch ohne eine zusätzliche Fliehkraftkompensation nicht betätigt. Das bedeutet, die auf die gesamte Kolbenfläche wirkende Kraft ist insgesamt Null. Als die vorbestimmte Rotationsgeschwindigkeit wird erfindungsgemäß eine Höchstdrehzahl des Antriebes festgelegt.

Wie dies auch mit Hilfe des Diagramms in Fig. 1 veranschaulicht ist, stellt sich bei einer Rotation der rotierbaren Komponente 1 in der Kammer 8 ein vom Durchmesser und von der Drehzahl abhängiger Druck p = p(r) ein. In den Bereichen zwischen dem radialen Innenabstand ri des Kolbens 2 und dem radialen Dichtungsabstand r0 ist dieser Druck p(r) < p0 kleiner als der im radialen Dichtungsabstand r0 eingestellte Druck p(r0) = p0. In Bereichen zwischen dem radialen Dichtungsabstand r0 und dem radialen Außenabstand ra des Kolbens 2 erhöht sich der Druck p(r) > p0 gegenüber dem auf Höhe des radialen Dichtungsabstands r0 eingestellten Druck p(r0) = p0. Die resultierende Kraft F, welche auf die Stirnseite des Kolbens 2 wirkt, ist durch Integration des Drucks p(r) über den Bereich vom radialen Innenabstand ri bis zum radialen Außenabstand ra des Kolbens 2 berechenbar.

Ausgenutzt werden kann somit dass ein fliehkraftabhängiger Druckanteil pFliehöl des außenseitigen Abschnitts der Kammer 8 kompensierbar ist durch einen entsprechenden Unterdruck im innenseitigen Abschnitt der Kammer 8. Kern des Konzepts ist somit eine geeignete Durchmesserwahl, welche den von der Fliehkraft abhängigen Gesamtdruck deutlich reduziert und so konstruktive Ausführungen mit gar keinem Fliehkraftausgleich ermöglicht. Durch eine geeignete Stufung der Durchmesser der Kolbendichtungen relativ zum Durchmesser der Drehdurchführungsdichtungen, bzw. des radialen Innen- und des radialen Außenabstandes des Kolbens relativ zum Radius der Drehdurchführungsdichtungen, wird der Fliehöldruck auch ohne den Einsatz eines gegenwirkenden Kompensationskolbens kompensierbar.

Wird für den radialen Innenabstand des Kolbens ein Wert kleiner dem radialen Dichtungsabstand r0 und somit kleiner dem Radius der Drehdurchführungsdichtungen gewählt, so entsteht bei Rotation in demjenigen Bereich der Kammer 8 mit einem radialen Abstand von der Rotationsachse kleiner als der Dichtungsabstand r0 ein Unterdruck. Vorzugsweise wird darüber hinaus der radiale Außenabstand ra des Kolbens derart gewählt, dass im außenseitigen Bereich der Kammer 8 ein Fliehöldruck entsteht, welcher im Zusammenwirken mit dem beschriebenen Unterdruck geeignet ist, innerhalb der Kammer 8 ein Gesamtdruckverhältnis auszubilden, welches dem Umgebungsdruck oder dem gewünschten Betätigungsdruck entspricht.

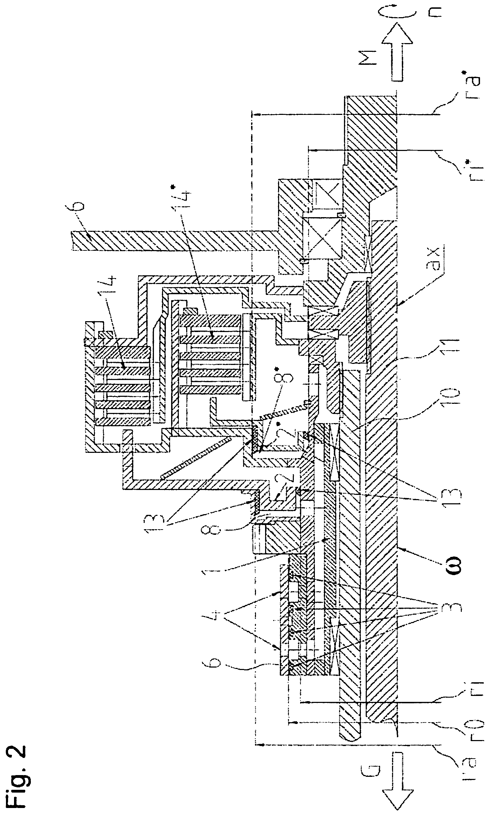

Fig. 2 zeigt eine erste beispielhafte Ausführungsform anhand einer Doppelkupplung, wobei die anhand Fig. 1 beschriebenen Komponenten und Funktionselemente skizziert sind. Mittels gleicher Bezugszeichen sind dabei die anhand Fig. 1 beschriebenen Komponenten gekennzeichnet, so dass lediglich Unterschiede beschrieben werden. Innerhalb der als Kolbendichtung ausgebildeten rotierbaren Komponente 1 sind weitere rotierbare Komponenten 10, 11, hier Getriebeeingangswellen eines Doppelkupplungsgetriebes angeordnet. Zusätzlich zu einer Kammer 8 zur Aufnahme eines ersten Kolbens 2 weist die rotierbare Komponente 1 eine zweite Kammer 8* zur Aufnahme eines zweiten Kolbens 2* auf. Mittels der beiden Kolben 2, 2* sind entsprechende weitere Komponenten in üblicher Art und Weise einer Mehrfachkupplung betätigbar. Die dargestellte Ausführungsform zeigt eine Anordnung, bei welcher zu jeder der Kammern 8, 8* eine eigene Leitung der Leitungsanordnung 4 führt.

Wie bei der anhand Fig. 1 skizzierten Ausführungsform ist auch bei der anhand Fig. 2 skizzierten Ausführungsform die Dimensionierung der radialen Abstände zur Rotationsachse ω derart gewählt, dass die radialen Innenabstände ri, ri* der beiden Kolben 2, 2* wieder kleiner als der radiale Dichtungsabstand r0 der Drehdurchführungsdichtung 3 ausgebildet ist. Im Fall unterschiedlicher radialer Innenabstände ri, ri* der beiden Kolben 2, 2* wird zur Einstellung für die resultierenden Kräfte in den Kammern 8, 8* vorzugsweise für jede der Kammer 8, 8* eine eigene Leitungsanordnung 4 bereitgestellt, um die Druckverhältnisse individuell vorbestimmen zu können. Die radialen Außenabstände ra, ra* der beiden Kolben 2, 2* sind in diesem Ausführungsbeispiel jeweils größer als der radiale Dichtungsabstand r0 gewählt.

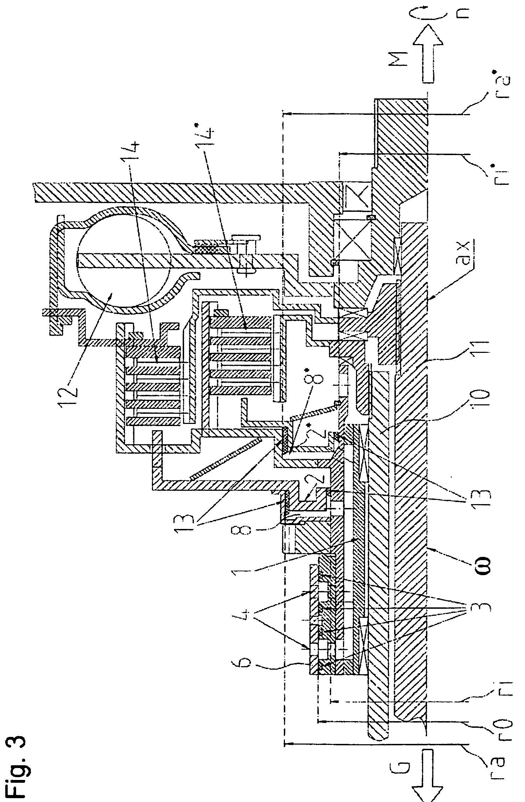

Fig. 3 zeigt eine weitere beispielhafte Ausführungsform einer Doppelkupplungseinrichtung, wobei diese im Gegensatz zu der Ausführungsform gemäß Fig. 2 einen integrierten Torsions-Schwingungsdämpfer 12 aufweist. Wie auch in Fig. 2 sind zusätzliche Kolbendichtungen 13 dargestellt. Die beiden Kolben 2, 2* betätigen jeweils eine diesen zugeordnete Kupplung 14, 14*.

Es hat sich gezeigt, dass eine Kupplungsanordnung gemäß der Erfindung aufgrund der Eliminierung oder zumindest Verringerung fliehkraftabhängiger Druckanteile besser und präziser ansteuern lässt.

### Bezugszeichenliste

- 1: rotierbare Komponente, ein- oder mehrteilig
- 2: Kolben
- 2*: zweiter Kolben
- 3: Drehdurchführungsdichtungen
- 4: Leitungsanordnung
- 6: gehäusefeste Komponente
- 8: hohlzylindrisch ausgebildete Kammer
- 8*: zweite Kammer
- 9: Spalt
- 10: rotierbare Komponente (erste Getriebeeingangswelle)
- 11: rotierbare Komponente (zweite Getriebeeingangswelle)
- 12: Schwingungsdämpfer
- 13: Kolbendichtungen
- 14: Kupplung
- 14*: Kupplung
- r0: radialer Dichtungsabstand
- ra: radialer Außenabstand des Kolbens
- ra*: radialer Außenabstand des Kolbens
- ri: radialer Innenabstand des Kolbens
- ri*: radialer Innenabstand des Kolbens
- p: drehzahlabhängiger Druck
- F: Kraft auf die Stirnseite des Kolbens
- ω: Rotationsachse

## Patentansprüche

1. Kupplungsanordnung mit
- einer gehäusefesten Komponente (6),
- einem Kolben (2, 2*), der relativ zur gehäusefesten Komponente (6) um eine Rotationsachse (ω) drehbar angeordnet ist,
- einer rotierbaren Komponente (1), die relativ zur gehäusefesten Komponente (6) als eine um die Rotationsachse (ω) angeordnete Komponente ausgebildet ist und eine Kammer (8, 8*) im stirnseitigen Bereich des Kolbens (2, 2*) aufweist,
- einer Leitungsanordnung (4), die für ein Druckmedium durch die gehäusefeste Komponente (6) und die rotierbare Komponente (1) hindurch eine Kommunikationsleitung zur Kammer (8) ausbildet, und
- einem Antrieb,
- wobei von der Rotationsachse (ω) ausgehend ein radialer Innenabstand (ri, ri*) des Kolbens (2, 2*) kleiner als ein radialer Dichtungsabstand (r0) einer Drehdurchführungsdichtung (3) ist,
**dadurch gekennzeichnet,**
**dass** ein Verhältnis ((r0 - ri) / (ra - r0)) von einerseits dem radialen Innenabstand (ri) des Kolbens (2) und von andererseits einem radialen Außenabstand (ra) des Kolbens (2) zum radialen Dichtungsabstand (r0) bei einer vorbestimmten Rotationsgeschwindigkeit der rotierbaren Komponente (1), die der Höchstdrehzahl des Antriebes entspricht, derart dimensioniert ist, dass ein auf den Kolben (2) wirkender Druck (p) den Kolben (2) auch ohne eine zusätzliche Fliehkraftkompensation nicht betätigt,
oder dass von der Rotationsachse (ω) ausgehend ein radialer Außenabstand (ra, ra*) des Kolbens (2, 2*) kleiner als ein radialer Dichtungsabstand (r0) einer Drehdurchführungsdichtung (3) ist.

2. Kupplungsanordnung nach Anspruch 1, **dadurch gekennzeichnet, dass** die rotierbare Komponente (1) eine Kolbendichtung aufweist oder ausbildet oder die Kolbendichtung am Kolben selber angebracht ist.

3. Kupplungsanordnung nach einem der Ansprüche 1 oder 2, **dadurch gekennzeichnet, dass**
- die Leitungsanordnung (4) eine gemeinsame oder eine zusätzliche Kommunikationsleitung zu zumindest einer weiteren Kammer (8*) für einen weiteren Kolben (2*) ausbildet und
- von der Rotationsachse (ω) ausgehend ein radialer Innenabstand (ri*) des weiteren Kolbens (2*) kleiner als der radiale Dichtungsabstand (r0) der Drehdurchführungsdichtung (3) ist oder von der Rotationsachse (ω) ausgehend ein radialer Außenabstand (ra) des weiteren Kolbens (2*) kleiner als der radiale Dichtungsabstand (r0) der Drehdurchführungsdichtung (3) ist.

4. Kupplungsanordnung nach einem der Ansprüche 1 bis 3, **dadurch gekennzeichnet, dass**
- der Kolben zumindest stirnseitig im Wesentlichen hohlzylinderförmig ausgebildet ist und
- die Kammer ring- oder hohlzylinderförmig ausgebildet ist.

## Claims

1. Clutch arrangement having
- a housing-fixed component (6),
- a piston (2, 2*) which is arranged so as to be rotatable about a rotational axis (ω) relative to the housing-fixed component (6),
- a rotatable component (1) which is formed, relative to the housing-fixed component (6), as a component which is arranged around the rotational axis (ω), which rotatable component (1) has a chamber (8, 8*) in the end-side region of the piston (2, 2*),
- a line arrangement (4) which, for a pressure medium, forms a communication line through the housing-fixed component (6) and through the rotatable component (1) to the chamber (8),and
- a drive,
- wherein, proceeding from the rotational axis (ω), a radial inside distance (ri, ri*) of the piston (2, 2*) is smaller than a radial seal distance (r0) of a rotary leadthrough seal (3),
**characterized**
**in that** a ratio ((r0 - ri) / (ra - r0)) of firstly the radial inside distance (ri) of the piston (2) and of secondly a radial outside distance (ra) of the piston (2) to the radial seal distance (r0) at a predetermined rotational speed of the rotatable component (1), which speed corresponds to the maximum rotational speed of the drive, is dimensioned such that a pressure (p) acting on the piston (2) does not actuate the piston (2) even without additional centrifugal force compensation,
or in that, proceeding from the rotational axis (ω), a radial outside distance (ra, ra*) of the piston (2, 2*) is smaller than a radial seal distance (r0) of a rotary leadthrough seal (3).

2. Clutch arrangement according to Claim 1, **characterized in that** the rotatable component (1) has or forms a piston seal or the piston seal is attached to the piston itself.

3. Clutch arrangement according to one of Claims 1 and 2, **characterized in that**
- the line arrangement (4) forms a common or additional communication line to at least one further chamber (8*) for a further piston (2*), and,
- proceeding from the rotational axis (w), a radial inside distance (ri*) of the further piston (2*) is smaller than the radial seal distance (r0) of the rotary leadthrough seal (3) or, proceeding from the rotational axis (w), a radial outside distance (ra) of the further piston (2*) is smaller than the radial seal distance (r0) of the rotary leadthrough seal (3).

4. Clutch arrangement according to one of Claims 1 to 3, **characterized in that**
- the piston is of substantially hollow cylindrical design at least at the end side, and
- the chamber is of annular or hollow cylindrical design.

## Revendications

1. Dispositif d'embrayage avec :
- un composant (6) fixé au carter ;
- un piston (2, 2*) disposé de façon à pouvoir pivoter autour d'un axe de rotation (ω) par rapport au composant (6) fixé au carter ;
- un composant pivotable (1) réalisé, par rapport au composant (6) fixé au carter, sous la forme d'un composant disposé autour de l'axe de rotation (ω) et une chambre (8, 8*) comportant dans le côté avant une zone du piston (2, 2*) ;
- un agencement de conduite (4) formant, pour un agent sous pression traversant le composant (6) fixé au carter et le composant pivotable (1), une conduite de communication menant à la chambre (8) ; et
- un entraînement ;
- une distance intérieure (ri, ri*) radiale du piston (2, 2*) étant inférieure, par rapport à l'axe de rotation (ω), à une distance de joint (r0) radiale d'un joint d'exécution de rotation (3) ;
**caractérisé en ce que** :
un rapport ((r0 - ri) / (ra - r0)) allant d'une part de la distance intérieure (ri) radiale du piston (2) et d'autre part d'une distance extérieure (ra) radiale du piston (2) à la distance de joint (r0) radiale est dimensionné de telle sorte, en cas de vitesse de rotation prédéfinie du composant pivotable (1) correspondant à la plus grande vitesse de rotation de l'entraînement, qu'une pression (p) agissant sur le piston (2) n'actionne pas le piston (2) également sans compensation de force centrifuge supplémentaire ;
ou qu'à partir de l'axe de rotation (ω), une distance extérieure (ra, ra*) radiale du piston (2, 2*) est inférieure à une distance de joint (r0) radiale d'un joint d'exécution de rotation (3).

2. Dispositif d'embrayage selon la revendication 1, **caractérisé en ce que** le composant pivotable (1) comporte ou forme un joint de piston ou que le joint de piston est lui-même placé au niveau du piston.

3. Dispositif d'embrayage selon l'une quelconque des revendications 1 ou 2, **caractérisé en ce que** :
- l'agencement de conduite (4) forme une conduite de communication commune ou supplémentaire menant à au moins une chambre (8*) supplémentaire pour un piston (2*) supplémentaire ; et
- à partir de l'axe de rotation (ω), une distance intérieure (ri*) radiale du piston (2*) supplémentaire est inférieure à la distance de joint (r0) radiale du joint d'exécution de rotation (3) ou à partir de l'axe de rotation (ω), une distance extérieure (ra) radiale du piston (2*) supplémentaire est inférieure à la distance de joint (r0) radiale du joint d'exécution de rotation (3).

4. Dispositif d'embrayage selon l'une quelconque des revendications 1 à 3, **caractérisé en ce que** :
- le piston est, au moins au niveau du côté avant, pour l'essentiel sous forme de cylindre creux ; et
- la chambre est réalisée sous forme de bague ou de cylindre creux.
